# EUROPEAN PATENT SPECIFICATION

(11) **EP 1 169 585 B1**
(45) Date of publication and mention of the grant of the patent: **02.03.2005**
(21) Application number: 00905872.8
(22) Date of filing: 31.01.2000
(51) Int. Cl.: F16J 15/32

(54) **SELF-CENTERING BRUSH SEAL**
SELBSTZENTRIERENDE BÜRSTENDICHTUNG
JOINT BROSSE AUTO-CENTREUR

(43) Date of publication of application: 09.01.2002
(73) Proprietor: General Electric Company, Schenectady, NY 12345 (US)
(72) Inventor: RELUZCO, George, Ernest, Schenectady, NY 12303 (US); WOODMANSEE, Donald, Ernest, Schenectady, NY 12309 (US); DINC, Osman, Saim, Troy, NY 12180 (US); TURNQUIST, Norman, Arnold, Sloansville, NY 12160 (US); WOLFE, Christopher, Edward, Niskayuna, NY 12309 (US)
(74) Representative: Goode, Ian Roy
(86) International application number: PCT/US2000/002439
(87) International publication number: WO 2001/055625

(56) References cited:
- US-A- 5 474 305
- US-A- 5 997 004

## Description

### TECHNICAL FIELD

The present invention relates to brush seals for rotary machines such as steam and gas turbines, and particularly relates to self-centering brush seals for sealing between rotary and stationary components.

### BACKGROUND OF THE INVENTION

Rotary machines such as steam and gas turbines, used for power generation and mechanical drive applications, are generally large machines consisting of multiple turbine stages. In the turbines, hot high pressure fluid flowing through the turbine stages must pass through a series of stationary and rotating components and seals between the stationary and rotating components are used to control leakage. Seals are also employed in other areas of the turbine than in the hot gas path; e.g., in end packings between the rotating shaft and the stationary components. Turbine efficiency is directly dependent upon the ability of the seals to prevent leakage.

Various types of seals have been employed between rotary and stationary components in turbomachinery, as well as in other machinery. Such seals have included labyrinth-type seals, brush seals, combination labyrinth/brush seals and the like. Brush seals have many advantages and benefits as compared with other types of seals. Brush seals typically are affixed in the stationary component, for example, in a fixed radial position about the rotating component. While such fixed brush seals afford very satisfactory seals for systems that are always concentric, they do not accommodate large relative off-axis motion between the rotary and fixed components, for example, during thermal transients and steady-state running conditions of the turbine. That is, brush seals accommodate only very small radial excursions of a shaft relative to a housing about the shaft. Predicting transient movement precisely by analysis is a very difficult task. Measurement of relative motion between stationary and fixed components can be costly and time-consuming. If the rotary and stationary component centerlines are not concentric during assembly or operation, the seal cannot itself maintain concentricity about the rotary component. The consequences of an incorrectly located fixed brush seal can be severe. For example, the shaft and brush seal backing plate can rub and rotor vibrations can be a consequence of heat generated during the rub. In general, brush seal performance degrades. While the brush seal fence height, i.e., the radial distance between the rotary shaft and the edge of the backing plate, can be increased to reduce the likelihood of a rub, this decreases the pressure capability of the seal.

In US-A-5,474,305, there is described a self-centering brush seal assembly which enables the brush seal to maintain concentricity with the axis of the rotary component during radial excursions of the rotary component. The brush seal thereof comprises an annular backing plate with brush seal bristles extending radially from the backing plate or canted in the direction of rotation for engagement with the rotary component. The brush seal is disposed in a groove in the stationary component which affords a radial clearance between the base of the groove and radial outermost portions of the brush seal. By removing the radial constraints on the brush seal, the seal is allowed to "float" in a radial direction and follow the radial excursions of the rotating shaft without large asymmetric bristle deformations. In this manner, the seal can remain concentric with the axis of rotation of the rotary component.

In accordance with the present invention, the self-centering brush seal hereof is provided in a segmented configuration. That is, a plurality of arcuate segments which may comprise the backing plate or upstream and downstream backing plates for the bristles of the brush seal are provided in short segments, for example, segments extending 60° or 90° which, together, make up a substantially closed annular ring about the rotary component. The segments and annular ring formed thereby are disposed in a groove in the stationary component with the required radial clearance, as well as with a spring which biases the segments radially inwardly to maintain engagement of the brush seal bristles with the rotary component. The spring in a preferred form may be a garter spring extending about the periphery of the segments for the full 360°. Alternatively, the radial inward bias may be provided by a plurality of leaf springs, one leaf spring for each segment, bearing between the base of the radial groove and an outer surface of the segment. In a still further form of the present invention, a combined garter/O-ring seal may be provided for disposition in a secondary groove within the groove of the stationary component.

By combining the garter spring and O-ring seal, a pressure balanced segmented brush seal may be provided. This embodiment balances the pressure on the inside and outside diameters of the brush seal by admitting low pressure fluid into the groove downstream of the O-ring seal. It will be appreciated that the bias afforded by the springs in all embodiments hereof must be such that the stiffness of the springs is low in comparison to the stiffness of the bristle pack. The springs not only maintain the seal segments in contact with the shaft but also allow the seal to maintain the designed fence height during relative off-axis motion between the rotary and stationary components.

Accordingly, it is a primary object of the present invention to provide a novel and improved self-centering brush seal assembly for sealing between rotary and stationary components in turbomachinery.

### BRIEF DESCRIPTION OF THE DRAWINGS

FIGURE 1 is a fragmentary cross-sectional view illustrating a self-centering brush seal between rotary and stationary components according to the present invention;
FIGURE 2 is a view similar to Figure 1 illustrating another embodiment thereof;
FIGURE 3 is a fragmentary cross-sectional view thereof taken generally about on line 3-3 in Figure 2;
FIGURE 4 is a view similar to Figure 1 illustrating brush seal segments in a third embodiment of the present invention;
FIGURE 5 is a fragmentary cross-sectional view through the rotary and stationary components illustrating the brush seal segments and leaf springs for biasing the segments of the embodiment of Figure 4;
FIGURE 6 is a view similar to Figure 1 illustrating a further embodiment of the present invention;
FIGURE 7 is a view similar to Figure 1 illustrating an axial pin engaging a backing plate of the brush seal; and
FIGURE 8 is a view similar to Figure 4 illustrating a radial pin in the flange of a backing plate.

### DETAILED DESCRIPTION OF THE INVENTION

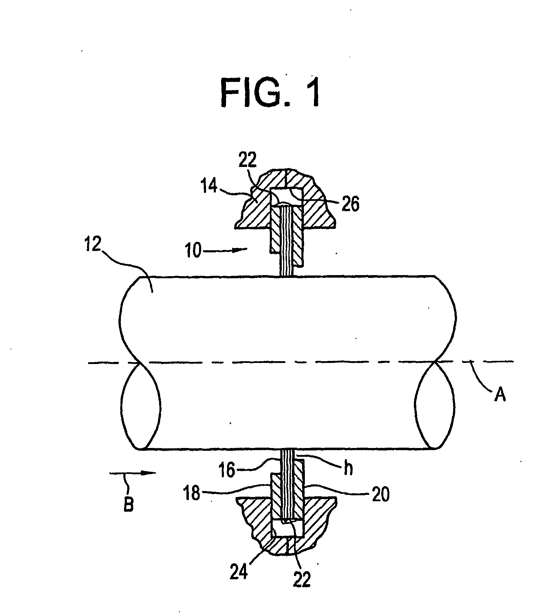

Referring now to the drawings, particularly to Figure 1, there is illustrated a self-centering brush seal between rotary and stationary components according to the present invention. Particularly, the brush seal, generally designated 10, is disposed between a rotary component, for example, a shaft 12, and a stationary component, for example, a housing 14 surrounding the shaft 12, the axis of rotation of the shaft 12 being designated A. It will be appreciated that the opening through the housing 14 is circular and lies on a common axis with axis A.

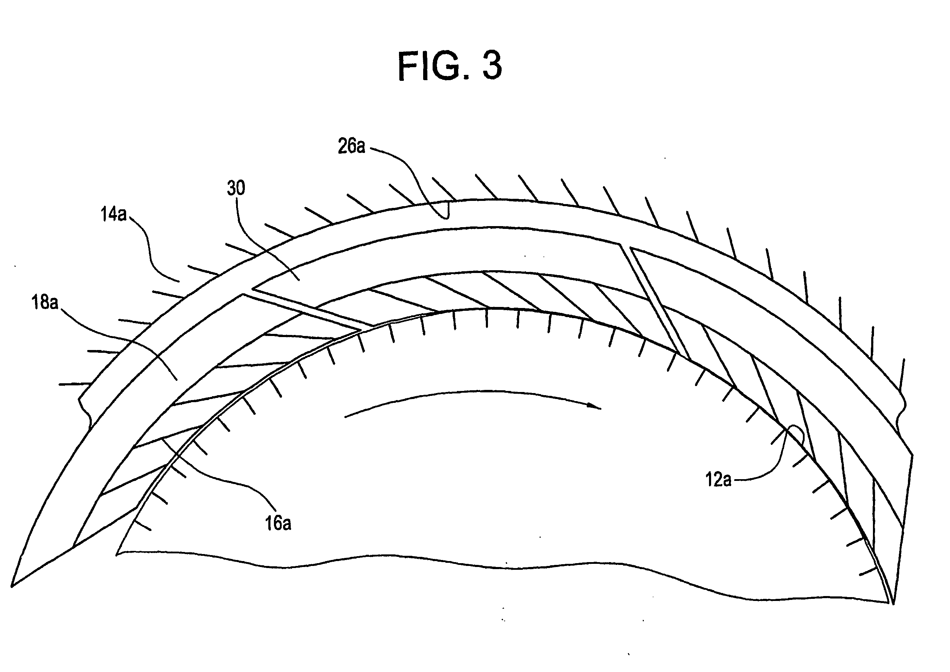

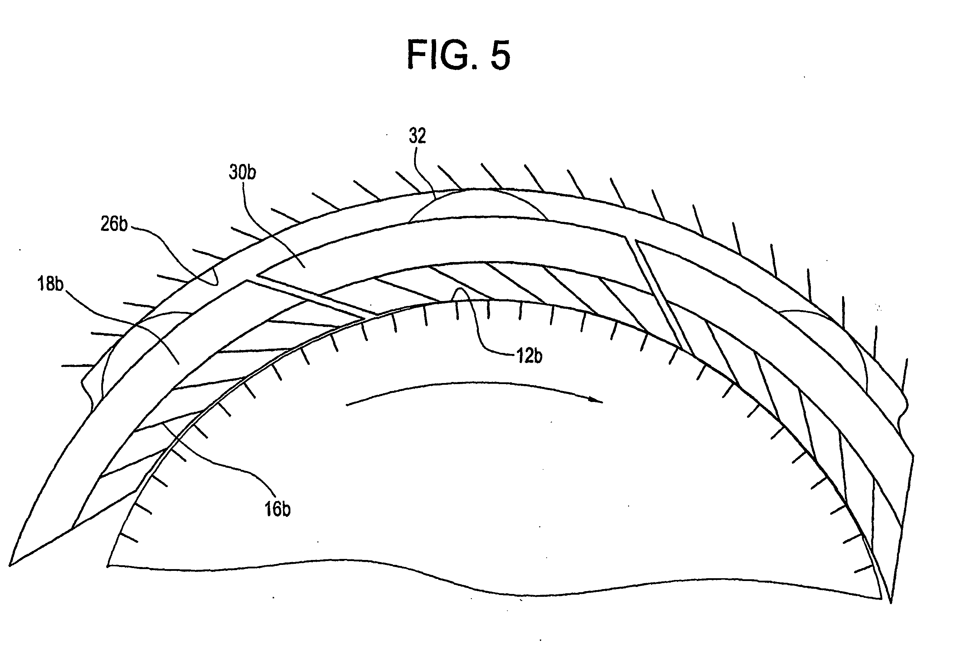

The brush seal 10 includes a plurality of bristles 16 which may extend in a generally radial direction but preferably lie at an angle offset from the radius in the direction of rotation of the shaft 12, for example, as illustrated in the embodiment of Figures 3 and 5. The bristles are sandwiched. or disposed between a pair of plates 18 and 20, respectively. The bristles 16, as well as the plates 18 and 20, form a complete 360° annulus about the rotary shaft 12. The bristles 16 are generally formed of an alloy metal wire drawn to a diameter of 0.002-0.006 inches, although larger diameter wires may be used in high pressure environments. It will be appreciated, however, that the bristles may be formed of polymer or ceramic materials, although metal bristles are preferred, for example, formed of Inconel X750 or Haynes-25. From a review of Figure 1, it will be seen that the backing plate 20 prevents deflection of the bristles 16 under the loading from the high pressure side, the direction of seal leakage, if any, being indicated by the arrow B and being from left to right in the drawing figure. Thus, the distal ends of the bristles 16 project beyond the inner diameter edge of the downstream annular backing plate 20 to engage and form a seal with the surface of the rotary component 12, e.g., the rotating shaft. The bristles 16 are preferably welded between the plates 18 and 20, for example, by providing a weld bead 22 along the radial outermost diameter of the brush seal. The bristles project from the radial inner end of the backing plate 20 a radial distance h which corresponds to the maximum defection of the rotary component in a radial direction. Consequently, the distance h must be a minimum corresponding to that maximum deflection and is dependent upon the expected relative radial deflection or deviation of the rotary component relative to its axis A for the specific machine and seal location. Thus, the distance h is the minimum fence height for the backing plate 20 and its inner diameter edge should exceed the distance h to the shaft.

As illustrated in Figure 1, the brush seal 10 is disposed in a groove 24 formed through the inner surface of the stationary component 14. The base 26 of the groove 24 has a diameter in excess of the outer diameter of the brush seal forming a radial clearance between the brush seal and the base of the groove. As a consequence of this configuration, it will be appreciated that all constraints on radial movement of the brush seal are removed and that the brush seal 10 "floats" within the groove 24. Consequently, the brush seal 10 is maintained concentric with the axis of rotation A of the rotary component 12, notwithstanding radial excursions of the axis A during thermal transients and steady-state running conditions. That is, the actual rotation of the shaft 12 may deviate in a radial direction from its designed axis of rotation, in which event the brush seal 10 self-aligns or self-centers by radial movement within the groove 24 with the axis A of the shaft 12.
Consequently, the axis of the brush seal and the shaft have common axes, notwithstanding radial excursions of the axis of the shaft 12 during assembly or operation.

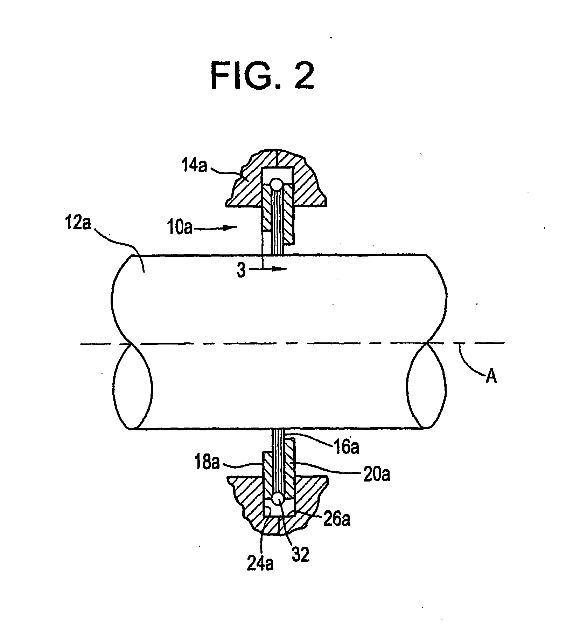

Referring now to Figures 2-3, wherein like reference numerals apply to like parts followed by the suffix "a", the brush seal 10a is provided in the form of a plurality of arcuate segments, for example, the segments 30. The segments 30 may be comprised of any number of segments, for example, from 4 to 8 or 10 segments, preferably equal to one another in arcuate length. The segments 30 may also have radially extending end faces or, as illustrated, end faces angled from the radii of the axis A in the same direction as the angled bristles. With appropriate spacing between the end faces, it will be appreciated that the segments 30 can move radially inwardly and outwardly independently of one another.

To maintain the distal ends of the bristles of the segments in constant sealing contact with the surface of the rotary shaft 12a, the segments are biased in a radial inward direction. To provide the radial inward bias, a circumferentially extending garter spring 32 is provided about the outer diameter of the brush seal 10a. The garter spring 32 biases the segments radially inwardly and has a low biasing force compared with the bristle pack thickness to permit the brush seal segments to be displaced radially outwardly upon radial excursions of the rotor 12a. The segmented brush seal 10a is otherwise freely floating within the groove 24a of the stationary component 14a.

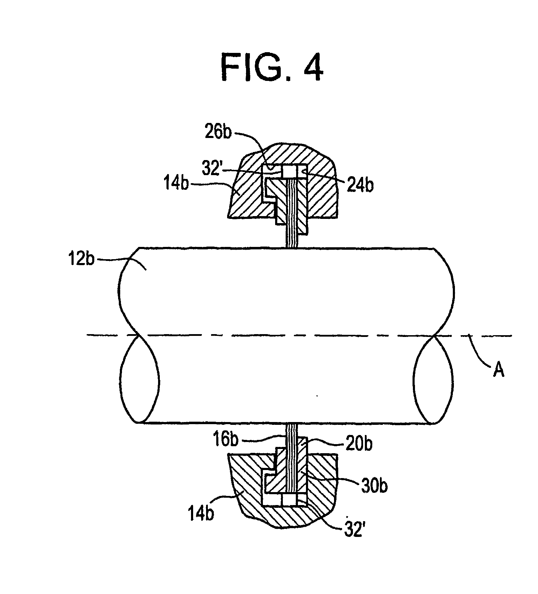

Referring now to Figures 4 and 5, wherein like reference numerals are applied to like parts as in the prior embodiments, followed by the suffix "b", there is illustrated brush seal segments 30b similar to those of the prior embodiment However, in this form, the radial inward bias is provided each segment by a leaf spring 32'. The leaf spring acts between the base 26b of the groove 24b, one leaf spring 32' being preferred for each segment 30b although additional leaf springs could be provided. Preferably, one end of leaf spring 32' is in-tumed into a slot in the outer diameter of the brush seal to secure the spring to the segments for ease of assembly, while the opposite end may remain free. As a consequence, each segment 30b is biased radially inwardly independently of the inward bias of other segments. In this manner, the distal ends of the bristles 16b maintain sealing contact with the outer surface of the shaft 12b, notwithstanding radial excursions of the shaft off its designed axis A.

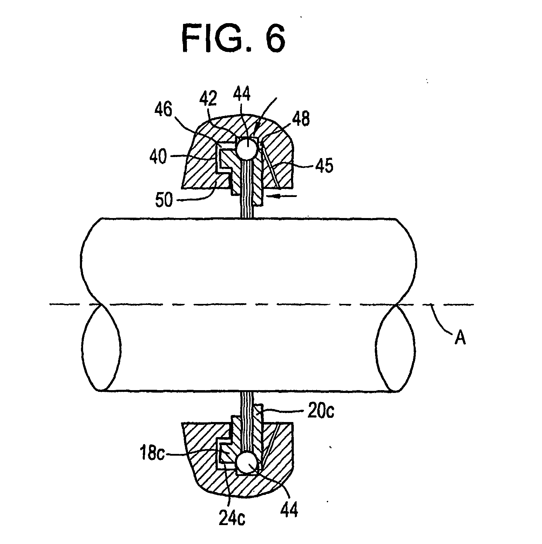

Referring now to Figure 6, there is illustrated a form of the present invention for use in high pressure applications. A garter spring is combined with an O-ring seal and seals within the groove to provide high and low pressure regions on opposite sides of the brush seal to balance the pressure on the inside and outside diameters of the brush seal. The groove 24c includes a dovetail 40 on the high pressure or upstream side of the seal as well as a further groove 42 formed radially outwardly for receiving the combined garter spring/O-ring seal. The groove 42 and the brush seal segments and particularly the bristles lie in a common diametrical plane. The combined garter spring and O-ring 44 seals in the groove 42 and seals between opposite sides of groove 42 defining a pair of chambers 46 and 48. A space between the plate 18c and the stationary hook 50 admits high pressure fluid into chamber 46 thereby balancing the pressure between the I.D. and O.D. on the upstream side of the brush seal. A passage 45 communicates between the low pressure region on the downstream side of the brush seal and the chamber 48 of groove 24c on the downstream side of the seal.

As a consequence of this construction, the high pressure applied against the diameter of the upstream plate 18c is balanced by the high pressure in groove 42, i.e., in chamber 46 on the outer diameter of the backing plate 18c. The low pressure applied against the inner and outer diameters of the downstream plate 20c also balance one another. Thus, a net radial inward bias is applied to the segments only by the garter spring similarly as in the embodiment of Figure 2.

In all of the embodiments of the present invention, including the full 360° brush seal illustrated in Figure 1 or the segmented brush seal illustrated in Figures 2-6, the brush seal is provided with an anti-rotation feature. For example, as illustrated in Figure 1, a radial extending slot 70 is formed along an axial face of one of the backing plates for the brush seal. An axially extending pin 72 projects from the stationary component into the radial slot 70, preventing circumferential motion of the brush seal but enabling radial motion such that the seal can follow the excursions of the rotating component. For the 360° seal, only one pin is required, white for the segmented seal, one pin per segment is required.

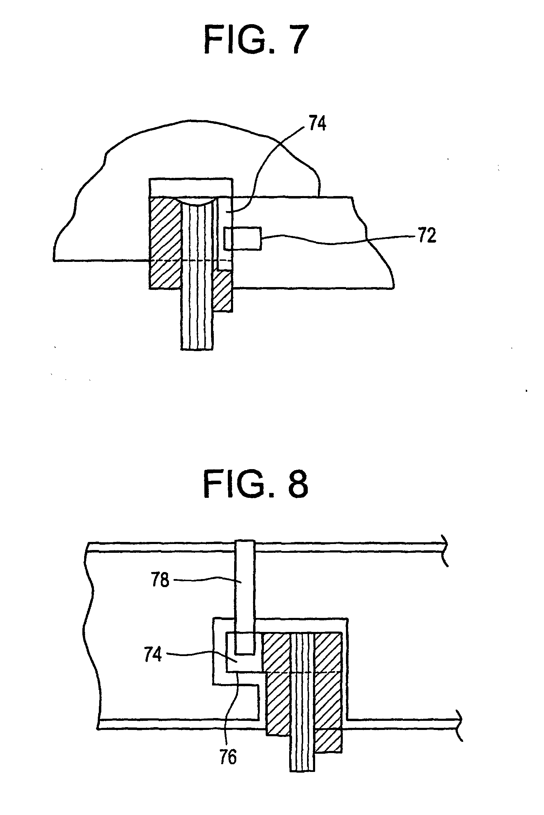

Figure 8 illustrates a further anti-rotation feature. In this embodiment, a radially opening slot 74 is formed in the flange 76 of one of the backing plates of the brush seal. A radially extending pin 78 affixed to the stationary component extends into slot 74, preventing circumferential movement of the brush seal relative to the stationary component, while enabling radial motion of the brush seal segment. Thus, in both forms of the anti-rotation feature, the pin forms a stop, preventing substantial circumferential movement of the brush seal relative to the stationary component.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A rotary machine comprising:
a component (12) rotatable about an axis (A) and a component (14) fixed against rotation about said axis, said fixed component having a circumferentially extending groove (24) opening toward said rotatable component;
a brush seal (10) disposed in said groove and including a plurality of bristles (16) and a support (18, 20) for said bristles, said bristles being secured to said support and projecting therefrom beyond said support into sealing engagement with said rotatable component; and
said brush seal and said groove having a radial clearance therebetween enabling the brush seal for radial movement to maintain substantial concentricity and sealing engagement with the rotatable component, notwithstanding deviation of the axis of rotation of said rotatable component relative to the axis of said fixed component,
said rotatable component (12) lying radially inwardly of said fixed component (14),
**characterised by** said brush seal (10) including a plurality of arcuate, circumferentially extending segments (30) disposed in part in said groove and a spring (32) biasing each segment for movement in a radial inward direction to maintain the bristles carried by said segments in contact with said rotatable component.

2. A machine according to Claim 1 wherein said groove (24) and said brush seal (10) cooperate with one another without substantial radial constraint therebetween, enabling the brush seal for free-floating radial excursions within said groove and concentricity with the rotatable component.

3. A machine according to Claim 1 wherein said spring (32) includes a circumferentially extending helical coil spring extending in said groove in contact with each segment to bias the segment radially inwardly.

4. A machine according to Claim 1 wherein said rotatable component lies radially inwardly of said fixed component, said brush seal including a plurality of arcuate, circumferentially extending segments (30b) disposed in part in said groove and springs (32') disposed between said stationary component and said segments for biasing said segments, respectively, for movement in a radial inward direction to maintain the bristles carried by said segments in contact with said rotatable component.

5. A machine according to Claim 1 wherein said brush seal includes a plurality of arcuate, circumferentially extending segments (30b) disposed in part in said groove and a spring (32') for each segment and extending between said segment and a base of said groove.

6. A machine according to Claim 5 wherein each of said springs (32') comprises a leaf spring.

7. A machine according to Claim 1 wherein said rotatable component lies radially inwardly of said fixed component, said brush seal including a plurality of arcuate, circumferentially extending segments disposed in part in said groove and a spring biasing each segment for movement in a radial inward direction to maintain the bristles carried by said segments in contact with said rotatable component, said brush seal forming a seal between high and low pressure regions on respective upstream and downstream sides of said brush seal, a seal (44) between said brush seal and said groove dividing the groove into two chambers (46, 48), a passage (45) in said stationary component in communication with the downstream low pressure side of said brush seal for communicating low pressure fluid from said downstream side to one of said chambers to balance the pressures along the inside and outside diameters of said brush seal.

8. A machine according to Claim 1 including an anti-rotation stop (72) carried by said fixed component and engaging said brush seal to prevent circumferential movement of said brush seal, while enabling radial movement thereof.

## Patentansprüche

1. Drehmaschine enthaltend:
eine Komponente (12), die um eine Achse (A) drehbar ist, und
eine Komponente (14), die gegen eine Drehung um die Achse fest ist, wobei die feststehende Komponente eine in Umfangsrichtung verlaufende Vertiefung (24) hat, die sich in Richtung auf die drehbare Komponente öffnet,
eine Bürstendichtung (10), die in der Vertiefung angeordnet ist und mehrere Borsten (16) und eine Halterung (18,20) für die Borsten aufweist, wobei die Borsten an der Halterung befestigt sind und von dort über die Halterung hinaus in einen Dichtungseingriff mit der drehbaren Komponente vorstehen, und
wobei die Bürstendichtung und die Vertiefung einen radialen Spielraum dazwischen haben, der eine radiale Bewegung der Bürstendichtung ermöglicht, um eine weitgehende Konzentrizität und einen Dichtungseingriff mit der drehbaren Komponente beizubehalten ungeachtet einer Abweichung der Drehachse der drehbaren Komponente relativ zur Achse der feststehenden Komponente,
wobei die drehbare Komponente (12) radial innen von der feststehenden Komponente (14) liegt,
**dadurch gekennzeichnet, daß** die Bürstendichtung (10) mehrere bogenförmige, in Umfangsrichtung verlaufende Segmente (30), die teilweise in der Vertiefung angeordnet sind, und eine Feder (32) aufweist, die jedes Segment für eine Bewegung in einer Richtung radial nach innen vorspannt, um die von den Segmenten getragenen Borsten in Kontakt mit der drehbaren Komponente zu halten.

2. Maschine nach Anspruch 1, wobei die Vertiefung (24) und die Bürstendichtung (10) miteinander zusammenarbeiten ohne wesentliche radiale Einschränkung dazwischen, wobei frei schwimmende radiale Ausschläge der Bürstendichtung in der Vertiefung und Konzentrizität mit der drehbaren Komponente ermöglicht werden.

3. Maschine nach Anspruch 1, wobei die Feder (32) eine in Umfangsrichtung verlaufende wendelförmige Schraubenfeder aufweist, die in der Vertiefung in Kontakt mit jedem Segment verläuft, um das Segment radial nach innen vorzuspannen.

4. Maschine nach Anspruch 1, wobei die drehbare Komponente radial innen von der feststehenden Komponente liegt, und die Bürstendichtung mehrere bogenförmige, in Umfangsrichtung verlaufende Segmente (30b), die teilweise in der Vertiefung angeordnet sind, und Federn (32') aufweist, die zwischen der stationären Komponente und den Segmenten angeordnet sind, um die Segmente auf entsprechende Weise für eine Bewegung in einer Richtung radial nach innen vorzuspannen, um die von den Segmenten getragenen Borsten in Kontakt mit der drehbaren Komponente zu halten.

5. Maschine nach Anspruch 1, wobei die Bürstendichtung mehrere bogenförmige, in Umfangsrichtung verlaufende Segmente (30b), die teilweise in der Vertiefung angeordnet sind, und eine Feder (32') für jedes Segment aufweist, die sich zwischen dem Segment und einer Basis der Vertiefung erstreckt.

6. Maschine nach Anspruch 5, wobei jede der Federn (32') eine Blattfeder aufweist.

7. Maschine nach Anspruch 1, wobei die drehbare Komponente (12) radial innen von der feststehenden Komponente (14) liegt, die Bürstendichtung mehrere bogenförmige, in Umfangsrichtung verlaufende Segmente, die teilweise in der Vertiefung angeordnet sind, und eine Feder aufweist, die jedes Segment für eine Bewegung in einer Richtung radial nach innen vorspannt, um die von den Segmenten getragenen Borsten in Kontakt mit der drehbaren Komponente zu halten, wobei die Bürstendichtung eine Dichtung zwischen Hoch- und Niederdruckbereichen auf entsprechenden stromaufwärtigen und stromabwärtigen Seiten der Bürstendichtung bildet, eine Dichtung (44) zwischen der Bürstendichtung und der Vertiefung die Vertiefung in zwei Kammern (46,48) teilt, ein Kanal (45) in der stationären Komponente in Verbindung mit der stromabwärtigen Niederdruckseite der Bürstendichtung ist für eine Verbindung des Niederdruckfluids von der stromabwärtigen Seite mit einer der Kammern, um die Drucke entlang den innenseitigen und aussenseitigen Durchmessern der Bürstendichtung auszugleichen.

8. Maschine nach Anspruch 1, enthaltend einen Anti-Rotations-Anschlag (72), der von der feststehenden Komponente getragen ist und an der Bürstendichtung angreift, um eine Umfangsbewegung der Bürstendichtung zu verhindern, während ihre radiale Bewegung gestattet wird.

## Revendications

1. Machine rotative comprenant :
un organe (12) pouvant tourner autour d'un axe (A) et un organe (14) fixe à l'encontre de la rotation autour dudit axe, ledit organe fixe comportant une rainure s'étendant de manière circonférentielle (24), ouverte vers ledit organe rotatif ;
un joint à brosse (10) placé dans ladite rainure et comportant une pluralité de poils (16) et un support (18, 20) pour lesdits poils, lesdits poils étant fixés audit support et faisant saillie depuis celui-ci au-delà dudit support en coopérant de manière étanche avec ledit organe rotatif ; et
ledit joint à brosse et ladite rainure ayant un intervalle radial entre eux permettant un mouvement radial au joint à brosse pour une concentricité et une coopération d'étanchéité substantielles avec l'organe rotatif, malgré l'écart de l'axe de rotation dudit organe rotatif par rapport à l'axe dudit organe fixe,
ledit organe rotatif (12) se trouvant radialement à l'intérieur dudit organe fixe (14), **caractérisée en ce que** ledit joint à brosse (10) comporte une pluralité de segments arqués s'étendant de manière circonférentielle (30) placés en partie dans ladite rainure et un ressort (32) sollicitant chaque segment pour un mouvement dans une direction intérieure radiale afin de maintenir les poils portés par lesdits segments en contact avec ledit organe rotatif.

2. Machine selon la revendication 1, dans laquelle ladite rainure (24) et ledit joint à brosse (10) coopèrent l'un avec l'autre sans contrainte radiale substantielle entre eux, autorisant au joint à brosse des excursions radiales à flottement libre dans ladite rainure et une concentricité avec l'organe rotatif.

3. Machine selon la revendication 1, dans laquelle ledit ressort (32) comprend un ressort hélicoïdal s'étendant de manière circonférentielle, qui s'étend dans ladite rainure en contact avec chaque segment pour solliciter le segment radialement vers l'intérieur.

4. Machine selon la revendication 1, dans laquelle ledit organe rotatif se trouve radialement à l'intérieur dudit organe fixe, ledit joint à brosse comportant une pluralité de segments arqués s'étendant de manière circonférentielle (30b) placés en partie dans ladite rainure et des ressorts (32') placés entre ledit organe statique et lesdits segments pour solliciter lesdits segments, respectivement, pour le mouvement dans une direction intérieure radiale afin de maintenir les poils portés par lesdits segments en contact avec ledit organe rotatif.

5. Machine selon la revendication 1, dans laquelle ledit joint à brosse comporte une pluralité de segments arqués s'étendant de manière circonférentielle (30b) placés en partie dans ladite rainure et un ressort (32') pour chaque segment et s'étendant entre ledit segment et une base de ladite rainure.

6. Machine selon la revendication 5, dans laquelle chacun desdits ressorts (32') comprend un ressort à lame.

7. Machine selon la revendication 1, dans laquelle ledit organe rotatif se trouve radialement à l'intérieur dudit composant fixe, ledit joint à brosse comportant une pluralité de segments arqués s'étendant de manière circonférentielle placés en partie dans ladite rainure et un ressort sollicitant chaque segment pour le mouvement dans une direction intérieure radiale afin de maintenir les poils portés par lesdits segments en contact avec ledit organe rotatif, ledit joint à brosse formant un joint entre des régions à haute et à basse pression sur les côtés respectifs amont et aval dudit joint à brosse, un joint (44) entre ledit joint à brosse et ladite rainure divisant la rainure en deux chambres (46, 48), un passage (45) dans ledit organe statique en communication avec le côté aval, à basse pression, dudit joint à brosse pour faire communiquer un fluide à basse pression dudit côté aval à l'une desdites chambres afin d'équilibrer les pressions le long des diamètres intérieur et extérieur dudit joint à brosse.

8. Machine selon la revendication 1 comportant une butée anti-rotation (72) portée par ledit organe fixe et coopérant avec ledit joint à brosse pour empêcher le mouvement circonférentiel dudit joint à brosse, tout en permettant le mouvement radial de celui-ci.
